# EUROPÄISCHE PATENTSCHRIFT

(11) **EP 3 533 749 B1**
(45) Veröffentlichungstag und Bekanntmachung des Hinweises auf die Patenterteilung: **26.08.2020**
(21) Anmeldenummer: 19159929.9
(22) Anmeldetag: 28.02.2019
(51) Int. Cl.: B66C 1/12, B66C 1/18, B60P 7/08

(54) **SCHUTZELEMENT FÜR EIN ZURR- ODER ANSCHLAGMITTEL**
PROTECTIVE ELEMENT FOR A LASHING OR ATTACHMENT MEANS
ÉLÉMENT DE PROTECTION POUR UN MOYEN D'ARRIMAGE OU D'ÉLINGAGE

(30) Priorität: 28.02.2018 DE 102018104548
(43) Veröffentlichungstag der Anmeldung: 04.09.2019
(73) Patentinhaber: SpanSet GmbH & Co. KG, 52531 Übach-Palenberg (DE)
(72) Erfinder: Schmitz, Ralf, 52477 Alsdorf (DE)
(74) Vertreter: Cohausz & Florack

(56) Entgegenhaltungen:
- DE-A1- 4 018 584
- DE-A1-102004 045 905
- DE-U1-202007 003 887

## Beschreibung

Die vorliegende Erfindung betrifft ein Schutzelement für ein Zurr- oder Anschlagmittel zum Heben, Spannen oder Zurren von Gegenständen mit einer flexiblen Unterlage zur Positionierung zwischen dem Zurr- oder Anschlagmittel und dem jeweiligen Gegenstand und mit einer mit der Unterlage verbundenen flexiblen Decklage. Die Erfindung betrifft zudem ein Befestigungssystem und eine Verwendung.

Gattungsgemäße Zurr- oder Anschlagmittel, beispielsweise Seile, Gurte oder Bänder, werden unter eine Zugkraft gesetzt, um den jeweiligen Gegenstand zu halten, anzuheben oder zu transportieren. Unter Anschlagmitteln werden dabei insbesondere die beim Heben oder Bewegen von Lasten herstellenden Verbindungsmittel zwischen der Last und der Hebe- bzw. Zugeinrichtung verstanden. Unter Zurrmitteln werden hingegen insbesondere Mittel zum Festhalten oder Fixieren von Gütern verstanden. So werden Zurrmittel insbesondere zur Ladungssicherung auf Fahrzeugen eingesetzt.

Sowohl bei einem Einsatz des Schutzelements an einem Zurrmittel als auch an einem Anschlagmittel hat das Schutzelement zum einen die Aufgabe, eine Beschädigung des jeweiligen Zurr- oder Anschlagmittels im Bereich von Kanten oder anderen Formelementen zu verhindern, an denen das Zurr- oder Anschlagmittel umgelenkt wird. Denn in diesen Bereichen kommt es zu hohen Flächenpressungen, die wiederum zu hohen Reibungskräften führen und die Gefahr mit sich bringen, dass scharfe Kanten des jeweiligen Gegenstandes in das Zurr- oder Anschlagmittel schneiden. Zudem ist es Aufgabe des Schutzelements eine Fixierung desZurr- oder Anschlagmittels zu erreichen.

Zum Schutz gegen derartige Beschädigungen wird jeweils ein Schutzelement mit seiner Unterlage oder Schutzlage im Bereich der Umlenkstellen zwischen das jeweilige Zurr- oder Anschlagmittel und den betreffenden Gegenstand positioniert, so dass das Zurr- oder Anschlagmittel nicht mehr unmittelbar den Gegenstand berührt, sondern auf der Unterlage aufliegt. Die Unterlage selbst nimmt dabei in der Regel keine Halte- oder Spannkräfte auf, so dass sie in der Regel ausschließlich im Hinblick auf ihre Schutzfunktion optimiert gestaltet wird. Auf diese Weise lassen sich Beschädigungen des Zurr- oder Anschlagmittels verhindern, zu denen es andernfalls in Folge der beim Spannen des Zurr- oder Anschlagmittels oder beim Transport unvermeidbaren Relativbewegungen zwischen dem Zurr- oder Anschlagmittel und dem Gegenstand kommen kann.

In der Praxis hat es sich bei gattungsgemäßen Schutzelementen jedoch als problematisch erwiesen, dass sie zwar wirkungsvoll den Schutz des Zurr- oder Anschlagmittels gegen abrasiven Verschleiß gewährleisten können. Im Gebrauch wird jedoch die Reibung zwischen dem lastaufnehmenden Zurr- oder Anschlagmittel und dem Schutzelement an den Umlenkstellen sehr hoch. Dies hat zur Folge, dass die vom Zurr- oder Anschlagmittel aufgenommenen bzw. aufgebrachten Kräfte von Umlenkstelle zu Umlenkstelle nicht gleichmäßig weitergeleitet werden, sondern dass es an den Umlenkstellen zu starken Belastungssprüngen im Zurr- oder Anschlagmittel kommt. Diese Belastungssprünge werden dadurch verursacht, dass das Zurr- oder Anschlagmittel im Bereich der Umlenkstellen trotz der Anwesenheit eines Schutzelements nur schlecht gleiten kann.

So führen die mangelhaften Gleiteigenschaften beispielswiese beim Heben von Gegenständen im Bereich der Umlenkstellen zu einer stark ungleichmäßigen Belastung der unterschiedlichen Abschnitte des jeweils verwendeten Zurr- oder Anschlagmittels. Dies kann dazu führen, dass der jeweils zu hebende Gegenstand beim Anheben ruckartig seine Lage im jeweiligen Hebezeug ändert, wenn die Wirkung der Gewichtskraft so stark ansteigt, dass die im Bereich der Umlenkstellen zuvor in Folge der Reibung wirkende Hemmung plötzlich überwunden wird.

Die mangelnde Gleiteigenschaft und die dadurch verursachte, beschriebenen Effekt erweisen sich auch bei Zurrguten als problematisch, da diese mit hohen Spannkräften beaufschlagt werden, etwa um Gegenstände bzw. Last oder Ladung zum Transport festzuzurren.

Darüber hinaus ergeben sich beim Einsatz von Zurrmitteln weitere Nachteile. So muss beim Einsatz von Zurrmitteln mit einem Vorspannungsverlust von 50 % und mehr zwischen der Seite des Zurrmittels, wo das jeweils verwendete Spanngerät angebracht ist, und der gegenüberliegenden Seite der gezurrten Ladung gerechnet werden. Dies bedeutet, dass bei einer normierten am Spanngerät aufgebrachten Vorspannkraft für die gegenüberliegende Seite der Ladung nur noch mit dem halben Wert gerechnet werden darf. Praktische Erfahrungen haben gezeigt, dass der Verlust an Vorspannung zwischen den zwei Seiten der Ladung sogar bis hin zu 80 % betragen kann. Um die jeweilige Ladung beidseits sicher zu halten, muss das Zurrmittel daher mit besonders hoher Kraft vorgespannt werden, um sicher zu stellen, dass noch ausreichend hohe Kräfte wirksam sind, um den sicheren Halt der Ladung zu garantieren. Dies führt jedoch zu höheren Anforderungen an das Zurrmittel, da dieses dann noch höheren Belastungen (Zugspannungen) ausgesetzt werden.

Aus der DE 10 2004 045 905 A1 ist ein gattungsgemäßes Schutzelement bekannt. Um eine verbesserte Kraftübertragung im Bereich von Umlenkstellen und eine gleichmäßige Belastung zu erreichen, wird vorgeschlagen, zwischen Zurr- oder Anschlagmittel und dem jeweiligen Gegenstand eine Schutzlage aus einem textilen Grundgewebe vorzusehen. Das textile Grundgewebe ist mit einem textilen Matetrial aus hochfesten Fasern verwebt, die eine glatte Oberfläche und damit eine höhere Gleiteigenschaft als das Grundgewebe bereitstellen sollen.

Problematisch ist hierbei allerdings, dass das Verweben der hochfesten Fasern mit dem textilen Grundmaterial nicht nur vergleichsweise aufwendig in der Herstellung ist, sondern auch vergleichsweise hohe Kosten verursacht. Durch das Einweben der Fasern erhält zudem auch die mit dem Gegenstand in Kontakt stehende Außenseite des Schutzelements eine erhöhte Gleiteigenschaft, was jedoch in der Regel nicht erwünscht ist. Dem muss dann im Bedarfsfall neben dem Grundmaterial und der zusätzlichen Faser mit noch einer weiteren außenseitigen Schicht aus abriebfestem Kunststoff entgegengewirkt werden, was den Aufwand bei der Herstellung weiter steigert. Auch verringert sich die Gleitfähigkeit im Innenbereich des Schutzelements aufgrund von Abrieb mit der Zeit. Dabei ist nicht erkennbar, ob und wann eine ausreichende vorteilhafte Wirkung durch die hochfeste Faser nicht oder nicht mehr zufriedenstellend erreicht werden kann und das Schutzelement eigentlich ausgetauscht werden müsste. Schließlich hat sich gezeigt, dass bei einem derartigen Ansatz nur eine geringe Längsstabilität des Schutzelements erreicht wird, was beispielsweise dazu führen kann, dass die Schutzelemente bei Verwendung nicht ausreichend geradlinig positioniert sind oder eine ungleichmäßige Belastung erfolgt.

Ausgehend von dem voranstehend erläuterten Stand der Technik liegt der Erfindung die Aufgabe zugrunde, ein gattungsgemäßes Schutzelement anzugeben, das die Vorteile der bekannten, auf einem textilen Material basierenden Schutzelemente, wie beispielsweise eine verbesserte Kraftübertragung, nutzt, wobei gleichzeitig aber eine einfache und kostengünstige Herstellung, eine Erkennbarkeit der Erforderlichkeit des Austausches und eine hohe Längsstabilität erreicht wird. Ebenfalls soll eine vorteilhaftes Befestigungssystem und eine vorteilhafte Verwendung vorgeschlagen werden.

Die Aufgabe wird bei einem gattungsgemäßen Schutzelement dadurch gelöst, dass die Unterlage zumindest eine äußere Schicht zur Anlage an dem Gegenstand und eine innere Schicht zur Anlage an dem Zurr- oder Anschlagmittel aufweist und dass die innere Schicht der Unterlage durch eine Kunststofffolie gebildet ist.

Dadurch, dass die Unterlage eine innere Schicht aus einer Kunststofffolie aufweist, kann zunächst eine bessere Gleitfähigkeit des Zurr- oder Anschlagmittels auf der Unterlage des Schutzelements erreicht werden. Hierdurch kann ein zu hoher Verlust der Vorspannkraft und eine ungleichmäßige Belastung reduziert oder vermieden werden. Die Herstellung des Schutzelements ist dabei insbesondere im Vergleich zu einem Einweben von Fasern vergleichsweise einfach und kostengünstig. Vorteilhaft werden bei dem erfindungsgemäßen Lösungsansatz mit einer inneren Kunststofffolie die Materialeigenschaften auf der Außenseite der Unterlage (zur Anlage an dem Gegenstand) nicht unerwünscht beeinflusst. Eine weitere Schicht oder Beschichtung ist somit nicht zwangsweise notwendig. Es hat sich zudem gezeigt, dass durch den erfindungsgemäßen Ansatz eine im Vergleich zum Stand der Technik verbesserte Längsstabilität des Schutzelements erreicht werden kann, was die Gefahr einer falschen oder unpräzisen Positionierung und einer ungleichmäßigen Belastung weiter verringert. Schließlich kann durch den erfindungsgemäßen Einsatz einer Kunststofffolie erreicht werden, dass diese gleichzeitig als Indikator für die Abnutzung und somit für einen erforderlichen Austausch des Schutzelements (beispielsweise wenn die Kunststofffolie reißt oder anreißt) dient.

Das Schutzelement kann, insbesondere falls dieses für ein Zurrmittel in Form eines Gurtes verwendet wird, als ein (variabler) Gurtcontroller oder Abrutschhemmer angesehen werden.

Wenn die Unterlage zwischen dem Zurr- oder Anschlagmittel und dem jeweiligen Gegenstand positioniert wird, kann die Unterlage auch nur in Anlage eines Teils des Gegenstands (beispielsweise eines Reifens eines Kraftfahrzeugs) sein.

Wie bereits eingangs ausgeführt, kann das Zurr- oder Anschlagmittel insbesondere gurt-, band-, oder seilförmig sei und insbesondere als Gurt, Band oder Seil ausgebildet sein. Beispielsweise ist das Zurr- oder Anschlagsmittel zur Übertragung von Zugspannungen ausgebildet. Beispielsweise ist das Zurr- oder Anschlagmittel zugstabil und/oder biegeschlaff. Beispielsweise ist das Zurr- oder Anschlagmittel als Gewebe ausgebildet. Beispielsweise ist das Zurr- oder Anschlagmittel ein textiles Zurr- oder Anschlagmittel.

Vorzugsweise ist das Schutzelement derart ausgebildet, dass ein Zurr- oder Anschlagsmittel mit einer Breite von zumindest 35 mm oder 50 mm aufgenommen werden kann.

Auch das Schutzelement, insbesondere die Decklage des Schutzelements, kann jedenfalls teilweise aus einem textilen Material hergestellt sein. Beispielsweise ist das Schutzelement im Wesentlichen schlauchförmig, wie im Folgenden noch genauer beschrieben wird.

Grundsätzlich ist es zwar möglich, dass das Schutzelement neben der Decklage und der Unterlage noch weitere Lagen aufweist. Allerdings ist es bevorzugt, wenn das Schutzelement lediglich aus einer (einer oder mehrschichtigen) Decklage und einer (zumindest die innere und äußere Schicht aufweisenden) Unterlage besteht.

Gemäß einer bevorzugten Ausgestaltung des erfindungsgemäßen Schutzelements ist die Außenseite der äußeren Schicht der Unterlage dazu ausgebildet, eine reib- und/oder formschlüssige Verbindung mit dem jeweiligen Gegenstand herzustellen. Das heißt, dass bei der bestimmungsgemäßen Verwendung des Schutzelements ein entsprechender Reibschluss und/oder Formschluss erreicht werden kann. Dies kann beispielsweise aufgrund der Struktur, des Materials und/oder der Materialeigenschaft der äußeren Schicht und insbesondere der Außenseite der äußeren Schicht erreicht werden. Beispielsweise weist die Außenseite der äußeren Schicht der Unterlage eine höhere (mittlere) Rauheit auf als die innere Schicht der Unterlage. Beispielsweise weist die Außenseite der äußeren Schicht der Unterlage bezogen auf den Gegenstand einen höheren Reibungskoeffizienten auf als die innere Schicht der Unterlage bezogen auf das Zurr- oder Anschlagmittel.

Um eine weiter verbesserte Verlässlichkeit insbesondere bei der Ladungssicherung zu erreichen, besteht gemäß einer bevorzugten Ausgestaltung des erfindungsgemäßen Schutzelements die äußere Schicht der Unterlage aus einem Gummimaterial und/oder weist auf ihrer Außenseite eine Oberflächenstruktur, insbesondere eine Noppen- und/oder Rippenstruktur, auf. Durch die Verwendung eines Gummimaterials kann ein hoher Reibungskoeffizient zur Erzielung eines Reibschlusses erreicht werden. Ist alternativ oder zusätzlich eine Oberflächenstruktur, wie eine Noppen- und/oder Rippenstruktur, vorgesehen, kann auf diese Weise zudem ein zumindest bereichsweiser Formschluss mit dem Gegenstand erreicht werden.

Um eine sowohl hohe als auch gleichmäßige Kraftübertragung zu erreichen, ist es gemäß einer bevorzugten Ausgestaltung des erfindungsgemäßen Schutzelements weiter bevorzugt, wenn die durch eine Kunststofffolie gebildete innere Schicht der Unterlage derart ausgebildet ist, dass das Zurr- oder Anschlagmittel im Wesentlichen nur mit der inneren Schicht der Unterlage in Kontakt kommt. Das heißt, dass bei bestimmungsgemäßer Verwendung das Zurr- oder Anschlagmittel zur Kraftübertragung im Wesentlichen nur mit der inneren Schicht in Kontakt kommt und nicht mit der sonstigen Unterlage. Dabei kann das Zurr- oder Anschlagmittel aber natürlich noch mit der Decklage in Kontakt kommen. Beispielsweise ist die Kunststofffolie im Wesentlichen flächig ausgebildet und bedeckt die äußere Schicht der Unterlage im Wesentlichen vollständig.

Gemäß einer weiteren bevorzugten Ausgestaltung des erfindungsgemäßen Schutzelements ist die durch die Kunststofffolie gebildete innere Schicht der Unterlage aus Polyethylen (PE) hergestellt. Es hat sich gezeigt, dass mit diesem Material trotz kostengünstiger Herstellung gute Gleiteigenschaften und damit eine hohe und homogene Kraftübertragung auf den Gegenstand erfolgen kann. Das Polyethylen kann beispielsweise PE-HD (HDPE), PE-LD (LDPE), PE-LLD (LLDPE), PE-HMW oder PE-UHMW sein, um einige nicht abschließende Beispiele zu nennen. Grundsätzlich ist auch die Verwendung anderer Kunststoffe möglich, wie beispielsweise Polypropylen (PP), Polyvinylchlorid (PVC), Polyethylenterephthalat (PET), Ethylen-Tetrafluorethylen (ETFE), Fluorethylenpropylen (FEP), Polylactid (PLA) oder Polytetrafluorethylen (PTFE).

Um eine ausreichende Flexibilität des Schutzelements bei gleichzeitig hoher Längsstabilität zu erzielen, weist gemäß einer weiteren bevorzugten Ausgestaltung des erfindungsgemäßen Schutzelements die durch die Kunststofffolie gebildete innere Schicht der Unterlage eine Dicke von 300µm oder weniger auf. Vorzugsweise beträgt die Dicke der Kunststofffolie höchstens 200µm, weiter bevorzugt höchstens 120µm. Vorzugsweise ist die Dicke der Kunststofffolie der inneren Schicht dabei größer als 20 µm, vorzugsweise größer als 50 µm.

Um die sowohl hohe als auch gleichmäßige Kraftübertragung weiter zu verbessern, ist gemäß einer weiteren bevorzugten Ausgestaltung des erfindungsgemäßen Schutzelements die durch die Kunststofffolie gebildete innere Schicht der Unterlage gleitfördernd ausgebildet. In einem Beispiel weist die Kunststofffolie Additive zur Gleitförderung auf. Die Additive können beispielsweise an die Oberfläche diffundieren und vorteilhafte Gleiteigenschaften bereitstellen.

Gemäß einer bevorzugten Ausgestaltung des erfindungsgemäßen Schutzelements wird die Decklage aus mehreren entlang des Schutzelements angeordneten Decklagenabschnitten gebildet. Beispielsweise ist die ist die Decklage aus separaten Decklagenabschnitten gebildet. Ebenfalls ist denkbar, dass Öffnungen oder Schlitze in die Decklage zur Bildung der Decklagenabschnitte eingebracht sind. Beispielsweise ist die Decklage nur in Abschnitten mit der Unterlage verbunden. Besonders bevorzugt sind die Decklagenabschnitte dabei beabstandet voneinander entlang des Schutzelements angeordnet und zwischen den Decklangeabschnitten sind decklagenfreie Abschnitte vorgesehen. Dabei können die decklagenfreien Abschnitte länger oder kürzer als die Decklagenabschnitte sein.

Die zuvor beschriebene Ausgestaltung hat zum einen den Vorteil, dass dem Verwender des Schutzelements die Möglichkeit gegeben wird, das Zurr- oder Anschlagmittel eigenständig und insbesondere ohne Werkzeug auszutauschen. Denn das Zurr- oder Anschlagmittel kann so Decklagenabschnitt für Decklagenabschnitt in das Schutzelement geschoben werden.

Besonders vorteilhaft an der zuvor beschriebenen Ausgestaltung ist, dass durch das Vorsehen von Decklagenabschnitten eine Längenanpassung des Schutzelements und damit eine Verwendung beispielsweise für unterschiedliche Gegenstandsgrößen (etwa Reifendurchmesser) möglich ist. Denn der Verwender kann das Zurr- oder Anschlagmittel beginnend mit dem endseitigen Decklagenabschnitt in das Schutzelemente (das heißt zwischen die Unterlage und die Decklage) schieben, sodass er ein entsprechend langes Schutzelement (beispielsweise für große Reifendurchmesser) erhält. Alternativ kann der Verwender das Zurr- oder Anschlagsmittel auch unter Aussparung von einem oder mehreren endseitigen Decklagenabschnitten in das Schutzelement einschieben, sodass sich ein entsprechend kürzeres Schutzelement (beispielsweise für kleine Reifendurchmesser) ergibt. Der überhängende bzw. nicht benutzte Teil des Schutzelements kann beispielsweise nach innen, das heißt zwischen Schutzelement und den entsprechenden Gegenstand, geklappt werden. Der Aufwand einer solchen Längenanpassung des Schutzelements ist minimal und kann bei unter einer Minute liegen.

Ein besonders sicherer Halt des Schutzelements am jeweiligen Zurr- oder Anschlagmittel lässt sich dadurch gewährleisten, dass das Schutzelement (zumindest abschnittsweise, vorzugsweise entlang der gesamten Länge) schlauchförmig ausgebildet ist und sich die Kunststofffolie zumindest über einen Längsabschnitt der Innenseite der Unterlage, vorzugsweise über die gesamte Innenseite der Unterlage erstreckt. Im Einsatz wird das derart ausgebildete Schutzelement am Zurr- oder Anschlagmittel so ausgerichtet, dass der mit der Kunststofffolie versehene Längsabschnitt zur Auflage an den jeweiligen Gegenstand kommt.

Eine schlauchförmige oder tunnelförmige Ausbildung hat den Vorteil, dass die Reibung weiterhin reduziert wird, da das Zurr- oder Anschlagsmittel deutlich mehr Bewegungsfreiheit im Schutzelement hat. Zudem wird der entstehende Längenunterschied zwischen Unterlage und Decklage beim Anlegen an einen Gegenstand (etwa bei einem Reifen) etwas ausgeglichen. Bisher übliche Vernähungen führten zu einer relevanten Klemmung des Zurr- oder Anschlagmittels.

Schlauchförmige erfindungsgemäße Schutzelemente haben den weiteren Vorteil, dass sie das Zurr- oder Anschlagmittel um seinen gesamten Umfang schützen und ein Abrutschen des Zurr- oder Anschlagmittels vom Schutzelement verhindert wird. Besonders bevorzugt ist das Vorsehen einer Kunststofffolie auf den Bereich der Unterlage beschränkt, der bei ordnungsgemäßem Gebrauch des Zurr- oder Anschlagmittels regelmäßig am betreffenden Gegenstand anliegt, was eine optimierte Materialausnutzung ergibt. Alternativ ist es aber möglich, dass die Kunststofffolie auch im Bereich der Decklage vorgesehen wird bzw. die Decklage ähnlich der Unterlage eine Kunststofffolie umfasst. Dies hat den Vorteil, dass unabhängig von der Orientierung des Schutzelements vorteilhafte Gleiteigenschaften zwischen Zurr- oder Anschlagmittel und Schutzelement erreicht werden.

Eine hohe Vielseitigkeit einer Ausgestaltung des erfindungsgemäßen Schutzelements lässt sich dadurch erreichen, dass das Schutzelement derart ausgebildet ist, dass das Zurr- oder Anschlagmittel im Wesentlichen frei in dem Schutzelement verschiebbar ist.

Eine besonders vorteilhafte Ausgestaltung des erfindungsgemäßen Schutzelements ist dadurch gekennzeichnet, dass die Decklage mit der Unteralge vernäht ist. Ist die Decklage mit der Untelage vernäht, ergibt sich eine besonders stabile und dauerhafte Verbindung insbesondere in Hinblick auf die bei der Verwendung auftretenden Zugkräften. Es hat sich herausgestellt, dass die erfindungsgemäß vorgesehene Unterlage und dabei insbesondere die durch die Kunststofffolie gebildete innere Schicht der Unterlage auf dieses Weise besonders sicher und zuverlässig angebunden werden kann. Vorzugsweise ist somit die Decklage sowohl mit der inneren Schicht als auch mit der äußeren Schicht der Unterlage vernäht.

Unter einem Vernähen wird insbesondere verstanden, dass ein oder mehrere Fäden wiederholt durch die Verbindungspartner geführt werden, wobei die Fäden miteinander oder mit den Verbindungspartnern verschlungen werden. Das heißt insbesondere, dass dabei die Decklage und die Unterlage perforiert werden. Dabei wird vorzugsweise auch die innere Schicht (Kunststofffolie) der Unterlage durch die Fäden perforiert und auf diese Weise mit der Decklage verbunden. Vorzugsweise verläuft in Längsrichtung entlang eines oder beider Randbereiche des Schutzelements jeweils zumindest eine Naht.

Alternativ oder zusätzlich können aber andere Verbindungsmöglichkeiten, insbesondere eine stoffschlüssige Verbindung der Decklage und Unterlage oder Schichten hiervon vorgesehen sein. So kann beispielsweise die durch die Kunststofffolie gebildete innere Schicht mit der äußeren Schicht der Unterlage zusätzlich verklebt sein.

Die eingangs genannte Aufgabe wird auch durch ein Befestigungssystem mit einem erfindungsgemäßen Schutzelement und mit einem Zurr- oder Anschlagmittel zum Heben, Spannen oder Zurren von Gegenständen gelöst.

Wie bereits eingangs ausgeführt, kann das Zurr- oder Anschlagmittel insbesondere aus textilem Material hergestellt sein. Beispielsweise weist das Zurr- oder Anschlagsmittel eine Breite von zumindest 35 mm auf. Das Zurr- oder Anschlagmittel (beispielsweise ein Zurrgurt) eignet sich dann beispielsweise zum Niederzurren von Fahrzeugen bis zu 4 t. Beispielsweise weist das Zurr- oder Anschlagsmittel eine Breite von zumindest 50 mm auf. Das Zurr- oder Anschlagmittel (beispielsweise ein Zurrgurt) eignet sich dann beispielsweise zum Niederzurren von Fahrzeugen auch von über 4 t bis hin zu 20 t. Beispielsweise ist das Zurr- oder Anschlagmittel für eine Zugkraft von mindestens 15.000 Newton ausgelegt. Typischerweise auftretende Ladungssicherungskräfte können auf diese Weise kompensiert werden. Das Zurr- oder Anschlagmittel sollte derart ausgelegt sein, dass bei bestimmungsgemäßer Verwendung die Dehnung weniger als 4% betragen sollte.

Bevorzugt ist die Länge des Schutzelements so bemessen, dass zumindest 50% des Radumfangs (typischerweise beträgt der Raddurchmesser bei einer hier anvisierten Verwendung höchstens 1,25 m) abgedeckt werden können. In Abhängigkeit von der Länge es Zurr- oder Anschlagmittels ist dies beispielsweise zumindest 20%, vorzugsweise zumindest 40%, beispielsweise in etwa 50% der Länge des Zurr- oder Anschlagmittels.

Gemäß einer bevorzugten Ausgestaltung ist das Zurr- oder Anschlagmittel unter Aussparung von einem oder mehreren endseitigen Decklagenabschnitten zwischen Unterlage und Decklage in dem Schutzelement anordenbar oder angeordnet. Wie bereits ausgeführt kann dadurch eine flexible Längenanpassung des Schutzelements an unterschiedliche Größen des zu sichernden Gegenstands erfolgen.

Eine bevorzugte Ausgestaltung des erfindungsgemäßen Befestigungssystems ist dadurch gekennzeichnet, dass das Befestigungssystem weiterhin mit dem Zurr- oder Anschlagmittel verbundene oder verbindbare Befestigungsmittel, insbesondere Haken aufweist. Derartige Verbindungsmittel können beispielsweise Haken, Ösen, Schlingen oder ähnliches sein. Beispielsweise sind zumindest zwei oder zumindest drei Befestigungsmittel vorgesehen. Beispielsweise bildet das Befestigungssystem ein Zwei-Punkt- oder ein Drei-Punkt-System.

Gemäß einer bevorzugten Ausgestaltung des erfindungsgemäßen Befestigungssystems weist das Befestigungssystem weiterhin Mittel zum Heben, Spannen oder Zurren des jeweiligen Gegenstands mittels des Zurr- oder Anschlagmittels auf. Beispielsweise ist ein Hebe- oder Spanngerät vorgesehen. Das Spanngerät kann beispielsweise eine Ratsche oder Gesperr sein, mit der bzw. dem eine Zugspannung in das Zurr- oder Anschlagmittel eingebracht wird und/oder dieses auf Spannung gehalten wird.

Die eingangs angegebene Aufgabe wird auch durch eine Verwendung eines erfindungsgemäßen Schutzelements oder eines erfindungsgemäßen Befestigungssystems zur Befestigung eines zu transportierenden Gegenstandes auf einem Transporter, insbesondere eines Fahrzeugs auf einem Fahrzeugtransporter, gelöst.

Der zu transportierende Gegenstand kann beispielsweise ein Fahrzeug, insbesondere ein Kraftfahrzeug sein, beispielsweise ein Pkw, Kleinbus, Nkw-Kombi (bis 4t) oder auch ein mittelschweres bis schweres Nutzfahrzeug (bis zu 20t). Der Transporter kann dementsprechend insbesondere ein Fahrzeugtransporter sein. Unter einem Fahrzeugtransporter wird insbesondere ein Fahrzeug verstanden, dessen Ladfläche Fahrbahnelemente aufweist und zur kraft- und/oder formschlüssigen Aufnahme von Ladungssicherungshilfsmitteln geeignet ist, sodass die notwendigen Ladungssicherungskräfte eingeleitet werden können. Beispielsweise weist der Fahrzeugtransporter auf seiner Ladefläche Mulden und/oder Brillen auf, die zur Absenkung und Fixierung der Räder des zu fixierenden bzw. transportieren Fahrzeugs dienen.

Das Zurr- oder Anschlagmittel kann mit dem beschriebenen Schutzelement dazu verwendet werden, eine ungefederte Masse (ein oder mehrere Räder des Fahrzeugs) zu sichern, insbesondere durch Niederzurren.

Ein wie beschriebenes Schutzelement bzw. Befestigungssystem ist insbesondere zur Ladungssicherung eines Fahrzeugs auf einem Fahrzeugtransporter durch Niederzurren eines Rads des Fahrzeugs besonders vorteilhaft. Die Unterlage des Schutzelements wird hierzu mit dem darauf angeordneten Zurrmittel (beispielsweise ein Zurrgurt) auf dem Rad (Reifen) positioniert. Durch die als Kunststofffolie ausgebildete innere Schicht werden dabei vorteilhafte Gleiteigenschaften erzielt, während durch die äußere Schicht der Unterlage ein vorteilhafter Reib- und/oder Formschluss mit dem Rad erzielt werden kann. Dabei ist die Länge des Schutzelements vorzugsweise so ausgelegt, dass das Zurrmittel das Rad nicht zu berühren braucht. Die Läge des Schutzelements beträgt beispielsweise zumindest 50% des Umfangs des zu sichernden Rades.

Die in Zusammenhang mit einzelnen Aspekten beschriebenen Ausgestaltungen sollen dabei auch in Bezug auf die übrigen Aspekte als offenbart gelten.

Im Weiteren soll die Erfindung anhand eines Ausführungsbeispiels in Verbindung mit der Zeichnung näher erläutert werden. Die Zeichnung zeigt in
- Fig. 1: eine perspektivische Ansicht eines Ausführungsbeispiels eines Befestigungssystems gemäß der Erfindung mit Schutzelement und Zurrgurt;
- Fig. 2A: eine Draufsicht des Befestigungssystems aus Fig. 1;
- Fig. 2B: eine Querschnittsansicht des Befestigungssystems aus Fig. 2A;
- Fig. 3: eine Seitenansicht bei einer beispielhaften Verwendung eines Befestigungssystems;
- Fig. 4A: eine perspektivische Ansicht eines weiteren Ausführungsbeispiels eines erfindungsgemäßen Schutzelements; und
- Fig. 4B: eine perspektivische Ansicht eines weiteren Ausführungsbeispiels eines erfindungsgemäßen Schutzelements.

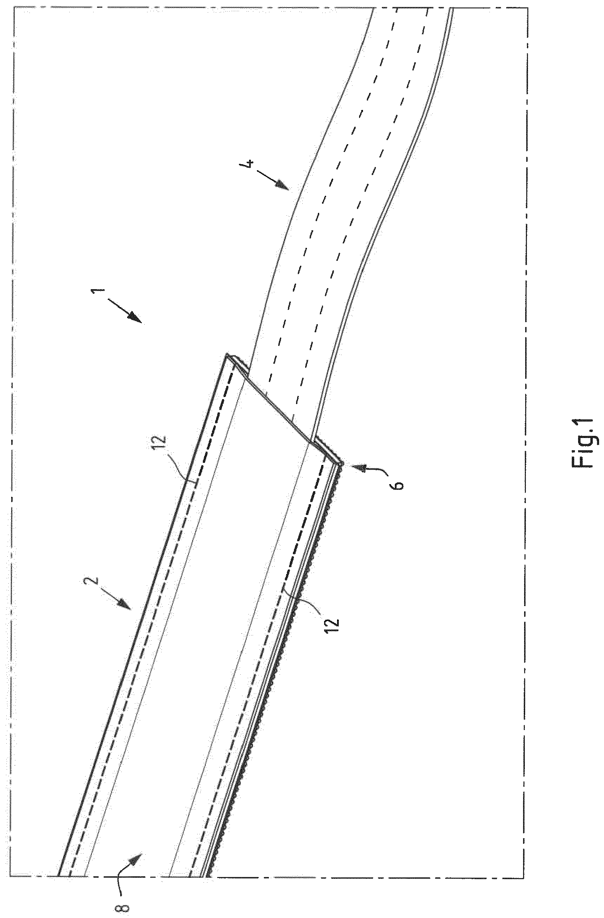

Fig. 1 zeigt zunächst eine perspektivische Ansicht eines Ausführungsbeispiels eines Befestigungssystems 1 gemäß der Erfindung. Das Befestigungssystem 1 umfasst ein Ausführungsbeispiel eines erfindungsgemäßen Schutzelements 2 und einen textilen Zurrgurt 4, welcher lediglich als ein Beispiel eines Zurr- oder Anschlagmittels dient, das im Rahmen der Erfindung verwendet werden kann.

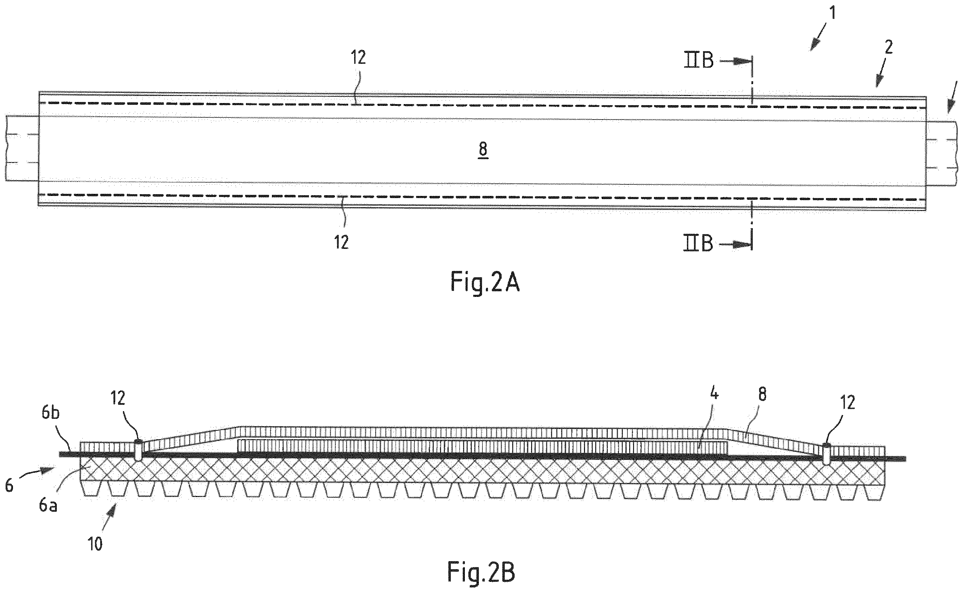

Das Befestigungssystem 1 ist auch in Fig. 2A, 2B dagestellt. Dabei zeigt Fig. 2A eine Draufsicht des Befestigungssystems 1 und Fig. 2B zeigt eine Querschnittsansicht des Befestigungssystems 1 entlang der in Fig. 2A eingezeichneten Linie IIB. Das Befestigungssystem 1 wird nun mit Verweis auf die Fig. 1, 2A und 2B näher beschrieben.

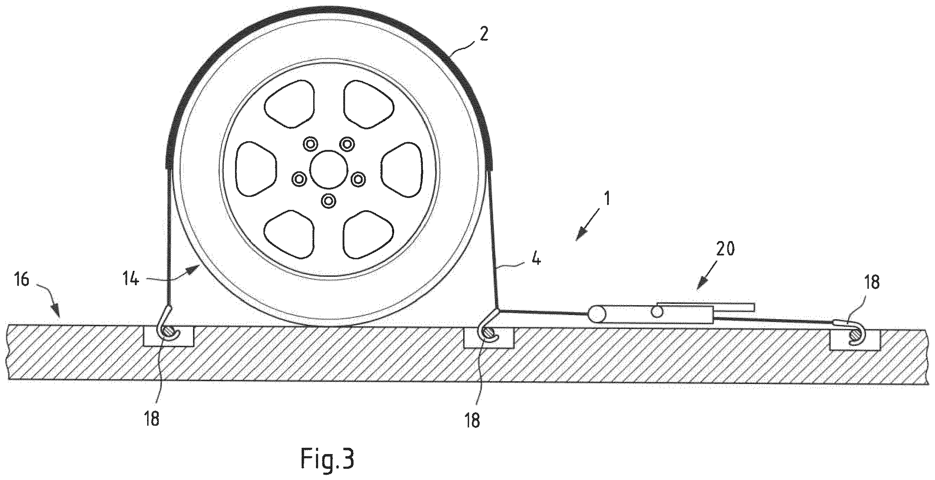

Der Zurrgurt 4 ist zusammen mit dem Schutzelement 2 in diesem Fall zum Spannen oder Zurren eines Rades eines Fahrzeugs vorgesehen, wie im Detail noch in Zusammenhang mit Fig. 3 beschrieben wird. Es kann jedoch gleichfalls ein anderes Zurr- oder Anschlagmittel vorgesehen werden und mit einem wie beschriebenen Schutzelement verwendet werden.

Das Schutzelement 2 weist eine flexible Unterlage 6 zur Positionierung zwischen dem Zurrgurt 4 und dem jeweiligen Gegenstand auf. Die Unterlage 6 weist eine äußere Schicht 6a zur Anlage an dem Gegenstand und eine innere Schicht 6b zur Anlage an dem Zurr- oder Anschlagmittel 4 auf. Weiterhin weist das Schutzelement 2 eine mit der Unterlage 6 verbundenen flexiblen Decklage 8 auf.

Die äußere Schicht 6a der Unterlage 6 besteht aus einem Gummimaterial und weist auf ihrer Außenseite eine Oberflächenstruktur in Form einer Noppenstruktur 10 auf. Dadurch ist die Außenseite der äußeren Schicht 6a der Unterlage 6 dazu ausgebildet, eine reib- und/oder formschlüssige Verbindung mit dem jeweiligen Gegenstand herzustellen.

Die innere Schicht 6b der Unterlage 6 ist eine Kunststofffolie. Die Kunststofffolie 6b ist in diesem Beispiel aus Polyethylen (PE) hergestellt. Grundsätzlich kann die Kunststofffolie 6b jedoch auch aus anderen geeigneten Kunststoffen hergestellt sein. Die Dicke der Kunststofffolie 6b beträgt hier weniger als 120 µm. Um die Gleiteigenschaften der inneren Schicht 6b weiter zu verbessern, weist die Kunststofffolie 6b Additive zur Gleitförderung auf.

Dabei erstreckt sich die durch die Kunststofffolie ausgebildete innere Schicht 6b der Unterlage 6 über die gesamte Länge und Breit der Innenseite der Unterlage 6, sodass der Zurrgurt 4 nur mit der inneren Schicht 6b und nicht mit der äußeren Schicht 6a (oder einer anderen möglicherweise vorgesehenen weiteren Zwischenschicht) der Unterlage 6 in Kontakt kommt. Es ist allerdings ebenfalls möglich, dass sich die Kunststofffolie 6b nur über einen bestimmten Längsabschnitt der Innenseite der Unterlage 6 erstreckt.

Die Decklage 8 ist mit der Unteralge 6 über Nähte 12, welche in Längsrichtung entlang der beiden Randbereiche des Schutzelements 2 verlaufen, vernäht. Die Nähte 12 verbinden die Decklage 8 mit beiden Schichten 6a, 6b der Unterlage 6. Durch die Nähte 12 wird die Kunststofffolie perforiert und sicher im Schutzelement 12 fixiert. Im Ergebnis ist das Schutzelement 2 schlauchförmig ausgebildet. Dabei ist der durch das Schutzelement 2 bereitgestellte Aufnahmeraum für das Zurr- oder Anschlagmittel 4 so bemessen, dass das Zurr- oder Anschlagmittel 4 im Wesentlichen frei in dem Schutzelement 2 verschiebbar ist.

Fig. 3 zeigt in einer Seitenansicht eine beispielhafte Verwendung des Befestigungssystems 1. Das Befestigungssystem 1 wird hier zur Ladungssicherung eines Fahrzeugs (nicht dargestellt) auf einem Fahrzeugtransporter (nicht dargestellt) eingesetzt, indem ein Rad 14 des Fahrzeugs durch niederzurren auf der mit Fahrbahnelementen versehenen Ladefläche 16 fixiert wird. Das Befestigungssystem weist hier weiterhin als Haken ausgebildete Befestigungsmittel 18 auf, die das Befestigungssystem 1 mit der Ladefläche 16 des Fahrzeugtransporters verbinden. Ebenfalls ist ein Mittel 20 zum Spannen oder Zurren des Zurrgurtes 4 in Form eines Spanngeräts oder einer Ratsche vorgesehen. Das Schutzelement 2 wird mit dem Zurrgurt 4 auf dem Rad 14, das heißt dem Reifen des Rades 14 positioniert, sodass die Unterlage 6 des Schutzelements 2 zwischen dem Zurrgurt 4 und dem Rad 14 angeordnet ist. Durch die als Kunststofffolie ausgebildete innere Schicht 6b des Schutzelements 2 wird dabei eine vorteilhafte Gleiteigenschaft des Schutzelements 6 erzielt, während durch die äußere Schicht 6a der Unterlage 6 ein vorteilhafter Reib- und/oder Formschluss mit dem Rad 14 erzielt werden kann. Mithilfe der Ratsche 20 kann eine das Rad 14 fixierende Zugkraft auf den Zurrgurt 4 ausgeübt werden. Aufgrund der durch die Kunststofffolie erzielten, vorteilhaften Gleiteigenschaft des Schutzelements 2 erfolgt nur ein geringer Verlust der aufgebrachten Zugkraft. Zudem wird die Kraft zur Ladungssicherung sehr homogen in radial einwärts wirkender Richtung auf das Rad 14 aufgebracht.

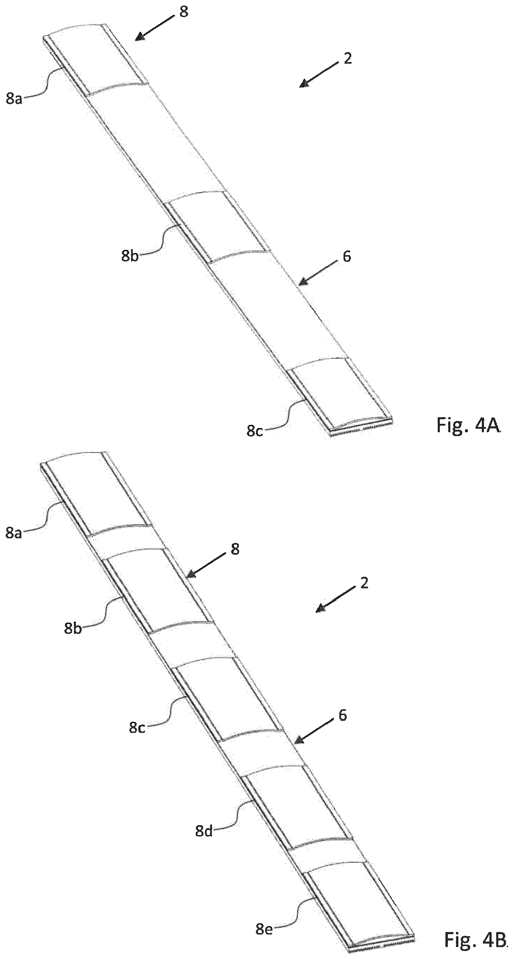

Fig. 4A und 4B zeigen nun perspektivische Ansichten von zwei weiteren Ausführungsbeispielen erfindungsgemäßer Schutzelemente 2. Dabei werden für entsprechende Komponenten die gleichen Bezugszeichen verwendet. Im Unterschied zu dem zuvor beschriebenen Ausführungsbeispiel weist das in Fig. 4A gezeigte Schutzelement 2 eine Decklage 8 auf, die aus mehreren entlang des Schutzelements 2 angeordneten Decklagenabschnitten 8a, 8b, 8c gebildet wird. Dabei sind die Decklagenabschnitte 8a, 8b, 8c beabstandet voneinander entlang des Schutzelements 2 angeordnet und zwischen den Decklangeabschnitten 8a, 8b, 8c sind decklagenfreie Abschnitte vorgesehen. Die decklagenfreien Abschnitte sind dabei länger als die Decklagenabschnitte 8a, 8b, 8c. Diese Ausführungsform ermöglicht es besonders vorteilhaft, dass der Verwender den Zurrgurt 4 eigenständig ohne Werkzeug austauschen kann.

Auch das in Fig. 4B gezeigte Schutzelement 2 weist eine Decklage 8 auf, die aus mehreren entlang des Schutzelements 2 angeordneten und voneinander beabstandete Decklagenabschnitten 8a, 8b, 8c, 8d, 8e gebildet wird. In diesem Fall sind die decklagenfreien Abschnitte jedoch deutlich kürzer und insbesondere kürzer als die Decklagenabschnitte 8a, 8b, 8c, 8d, 8e. Diese Ausführungsform eignet sich besonders als längenanpassbares Schutzelement. Je nachdem bei welchem der Decklagenabschnitte der Verwender beginnt den Zurrgurt einzufädeln bzw. auszufädeln, erhält er ein entsprechend kürzeres oder längeres Schutzelement. So kann beispielsweise ein langes Schutzelement durch alle Decklagenabschnitte 8a, 8b, 8c, 8d, 8e (und die dazwischen liegenden decklagenfreien Abschnitte) gebildet werden. Ebenfalls könnte beispielsweise ein kürzeres Schutzelement nur durch einige der Decklagenabschnitte 8a, 8b, 8c, 8d, 8e (beispielsweise ohne die endseitigen Decklagenabschnitte 8a und/oder 8e, also beispielsweise nur durch die Decklagenabschnitte 8b, 8c, 8d und die dazwischenliegenden decklagenfreien Abschnitte) gebildet werden.

## Patentansprüche

1. Schutzelement (2) für ein Zurr- oder Anschlagmittel zum Heben, Spannen oder Zurren von Gegenständen
- mit einer flexiblen Unterlage (6) zur Positionierung zwischen dem Zurr- oder Anschlagmittel (4) und dem jeweiligen Gegenstand (14) und
- mit einer mit der Unterlage (6) verbundenen flexiblen Decklage (8), **dadurch gekennzeichnet, dass**
- die Unterlage (6) zumindest eine äußere Schicht (6a) zur Anlage an dem Gegenstand (14) und eine innere Schicht (6b) zur Anlage an dem Zurr- oder Anschlagmittel (4) aufweist und
- die innere Schicht (6b) der Unterlage (6) durch eine Kunststofffolie gebildet ist.

2. Schutzelement nach Anspruch 1, **dadurch gekennzeichnet, dass** die Außenseite der äußeren Schicht (6a) der Unterlage (6) dazu ausgebildet ist, eine reib- und/oder formschlüssige Verbindung mit dem jeweiligen Gegenstand (14) herzustellen.

3. Schutzelement nach Anspruch 1 oder 2, **dadurch gekennzeichnet, dass** die äußere Schicht (6a) der Unterlage (6) aus einem Gummimaterial besteht und/oder auf ihrer Außenseite eine Oberflächenstruktur (10), insbesondere eine Noppen- und/oder Rippenstruktur, aufweist.

4. Schutzelement nach einem der vorhergehenden Ansprüche, **dadurch gekennzeichnet, dass** die durch eine Kunststofffolie gebildete innere Schicht (6b) der Unterlage derart ausgebildet ist, dass das Zurr- oder Anschlagmittel (4) im Wesentlichen nur mit der inneren Schicht (6b) der Unterlage in Kontakt kommt.

5. Schutzelement nach einem der vorhergehenden Ansprüche, **dadurch gekennzeichnet, dass** die durch die Kunststofffolie gebildete innere Schicht (6b) der Unterlage (6) aus Polyethylen (PE) hergestellt ist.

6. Schutzelement nach einem der vorhergehenden Ansprüche, **dadurch gekennzeichnet, dass** die durch die Kunststofffolie gebildete innere Schicht (6b) der Unterlage (6) eine Dicke von 120µm oder weniger aufweist.

7. Schutzelement nach einem der vorhergehenden Ansprüche, **dadurch gekennzeichnet, dass** die durch die Kunststofffolie gebildete innere Schicht (6b) der Unterlage (6) gleitfördernd ausgebildet ist.

8. Schutzelement nach einem der vorhergehenden Ansprüche, **dadurch gekennzeichnet, dass** die Decklage (8) aus mehreren entlang des Schutzelements (2) angeordneten Decklagenabschnitten (8a, 8b, 8c, 8d, 8e) gebildet wird.

9. Schutzelement nach Anspruch 8, **dadurch gekennzeichnet, dass** die Decklagenabschnitte (8a, 8b, 8c, 8d, 8e) beabstandet voneinander entlang des Schutzelements (2) angeordnet sind und zwischen den Decklangeabschnitten (8a, 8b, 8c, 8d, 8e) decklagenfreie Abschnitte vorgesehen sind.

10. Schutzelement nach Anspruch 8, **dadurch gekennzeichnet, dass** die decklagenfreien Abschnitte länger oder kürzer sind als die Decklagenabschnitte (8a, 8b, 8c, 8d, 8e).

11. Schutzelement nach einem der vorhergehenden Ansprüche, **dadurch gekennzeichnet, dass** das Schutzelement (2) schlauchförmig ausgebildet ist und sich die Kunststofffolie zumindest über einen Längsabschnitt der Innenseite der Unterlage (6), vorzugsweise über die gesamte Innenseite der Unterlage (6) erstreckt.

12. Schutzelement nach einem der vorhergehenden Ansprüche, **dadurch gekennzeichnet, dass** das Schutzelement (2) derart ausgebildet ist, dass das Zurr- oder Anschlagmittel (4) im Wesentlichen frei in dem Schutzelement (2) verschiebbar ist.

13. Schutzelement nach einem der vorhergehenden Ansprüche, **dadurch gekennzeichnet, dass** die Decklage (8) mit der Unteralge (6) vernäht ist.

14. Befestigungssystem (1)
- mit einem Schutzelement (2) nach einem der vorhergehenden Ansprüche und
- mit einem Zurr- oder Anschlagmittel (4) zum Heben, Spannen oder Zurren von Gegenständen (14).

15. Befestigungssystem nach Anspruch 14, **dadurch gekennzeichnet, dass** das Zurr- oder Anschlagmittel (4) unter Aussparung von einem oder mehreren endseitigen Decklagenabschnitten (8a, 8b, 8c, 8d, 8e) zwischen Unterlage (6) und Decklage (8) in dem Schutzelement (2) anordenbar oder angeordnet ist.

16. Befestigungssystem nach Anspruch 14 oder 15, **dadurch gekennzeichnet, dass** das Befestigungssystem (1) weiterhin mit dem Zurr- oder Anschlagmittel (4) verbundene oder verbindbare Befestigungsmittel (18), insbesondere Haken aufweist.

17. Befestigungssystem nach Anspruch 14 bis 16, **dadurch gekennzeichnet, dass** das Befestigungssystem (1) weiterhin Mittel (20) zum Heben, Spannen oder Zurren des jeweiligen Gegenstands (14) mittels des Zurr- oder Anschlagmittels aufweist.

18. Verwendung eines Schutzelements (2) nach einem der Ansprüche 1 bis 13 oder eines Befestigungssystems (1) nach einem der Ansprüche 14 bis 17 zur Befestigung eines zu transportierenden Gegenstandes (14) auf einem Transporter, insbesondere eines Fahrzeugs auf einem Fahrzeugtransporter.

## Claims

1. Protective element (2) for a lashing or slinging means for lifting, tensioning or lashing objects
- with a flexible base (6) for positioning between the lashing or slinging means (4) and the respective object (14) and
- with a flexible cover layer (8) connected to the base (6), **characterized in that**
- the base (6) has at least one outer layer (6a) for abutment against the object (14) and an inner layer (6b) for abutment against the lashing or slinging means (4) and
- the inner layer (6b) of the base (6) is formed by a plastic foil.

2. Protective element according to claim 1, **characterized in that** the outer side of the outer layer (6a) of the base (6) is configured to establish a friction-locking and/or positive-locking connection with the respective object (14).

3. Protective element according to claim 1 or 2, **characterized in that** the outer layer (6a) of the base (6) is made of a rubber material and/or has on its outer side a surface structure (10), in particular a nubbed and/or ribbed structure.

4. Protective element according to one of the preceding claims, **characterized in that** the inner layer (6b) of the base formed by a plastic foil is formed in such a way that the lashing or slinging means (4) comes into contact substantially only with the inner layer (6b) of the base.

5. Protective element according to one of the preceding claims, **characterized in that** the inner layer (6b) of the base (6) formed by the plastic foil is made of polyethylene (PE).

6. Protective element according to one of the preceding claims, **characterized in that** the inner layer (6b) of the base (6) formed by the plastic foil has a thickness of 120 µm or less.

7. Protective element according to one of the preceding claims, **characterized in that** the inner layer (6b) of the base (6) formed by the plastic foil is formed glide-enhancing.

8. Protective element according to one of the preceding claims, **characterized in that** the cover layer (8) is formed by a plurality of cover layer sections (8a, 8b, 8c, 8d, 8e) arranged along the protective element (2).

9. Protective element according to claim 8, **characterized in that** the cover layer sections (8a, 8b, 8c, 8d, 8e) are arranged spaced apart from one another along the protective element (2) and cover-layer-free sections are provided between the cover layer sections (8a, 8b, 8c, 8d, 8e).

10. Protective element according to claim 8, **characterized in that** the cover-layer-free sections are longer or shorter than the cover layer sections (8a, 8b, 8c, 8d, 8e).

11. Protective element according to one of the preceding claims, **characterized in that** the protective element (2) is hose-shaped and the plastic foil extends at least over a longitudinal section of the inner side of the base (6), preferably over the entire inner side of the base (6).

12. Protective element according to one of the preceding claims, **characterized in that** the protective element (2) is formed in such a way that the lashing or slinging means (4) is substantially freely movable in the protective element (2).

13. Protective element according to one of the preceding claims, **characterized in that** the cover layer (8) is sewn to the base (6).

14. Fastening system (1)
- with a protective element (2) according to one of the preceding claims and
- with a lashing or slinging means (4) for lifting, tensioning or lashing objects (14).

15. Fastening system according to claim 14, **characterized in that** the lashing or sling means (4) can be or is arranged in the protective element (2) between the base (6) and the cover layer (8) with recess of one or several terminal cover layer sections (8a, 8b, 8c, 8d, 8e).

16. Fastening system according to claim 14 or 15, **characterized in that** the fastening system (1) further comprises fastening means (18) connected or connectable to the lashing or slinging means (4), in particular hooks.

17. Fastening system according to claims 14 to 16, **characterized in that** the fastening system (1) further comprises means (20) for lifting, tensioning or lashing the respective object (14) by means of the lashing or sling means.

18. Use of a protective element (2) according to one of claims 1 to 13 or a fastening system (1) according to one of claims 14 to 17 for fastening an object (14) to be transported on a transporter, in particular a vehicle on a vehicle transporter.

## Revendications

1. Élément de protection (2) pour un moyen d'arrimage ou d'élingage pour le levage, le serrage ou l'arrimage d'objets
- avec une base (6) flexible pour le positionnement entre le moyen d'arrimage ou d'élingage (4) et l'objet (14) respectif et
- avec une couche de couverture (8) flexible reliée à la base (6), **caractérisé en ce que**
- la base (6) présente au moins une couche extérieure (6a) destinée à venir en butée contre l'objet (14) et une couche intérieure (6b) destinée à venir en butée contre les moyens d'arrimage ou d'élingage (4) et
- la couche intérieure (6b) de la base (6) est formée par un film plastique.

2. Élément de protection selon la revendication 1, **caractérisé en ce que** la face extérieure de la couche extérieure (6a) de la base (6) est configurée pour établir une liaison par verrouillage par friction et/ou par verrouillage positif avec l'objet (14) respectif.

3. Élément de protection selon la revendication 1 ou 2, **caractérisé en ce que** la couche extérieure (6a) de la base (6) est constituée d'un matériau en caoutchouc et/ou présente sur sa face extérieure une structure de surface (10), en particulier une structure à nopes et/ou à nervures.

4. Élément de protection selon l'une des revendications précédentes, **caractérisé en ce que** la couche intérieure (6b) de la base formée par un film plastique est formée de telle manière que le moyen d'arrimage ou d'élingage (4) entre en contact essentiellement seulement avec la couche intérieure (6b) de la base.

5. Élément de protection selon l'une des revendications précédentes, **caractérisé en ce que** la couche intérieure (6b) de la base (6) formée par le film plastique est constitué de polyéthylène (PE).

6. Élément de protection selon l'une des revendications précédentes, **caractérisé en ce que** la couche intérieure (6b) de la base (6) formée par le film plastique a une épaisseur de 120 µm ou moins.

7. Élément de protection selon l'une des revendications précédentes, **caractérisé en ce que** la couche intérieure (6b) de la base (6) formée par le film plastique est formée pour stimuler le glissement.

8. Élément de protection selon l'une des revendications précédentes, **caractérisé en ce que** la couche de couverture (8) est formée par une pluralité de sections de couche de couverture (8a, 8b, 8c, 8d, 8e) disposées le long de l'élément de protection (2).

9. Élément de protection selon la revendication 8, **caractérisé en ce que** les sections de couche de couverture (8a, 8b, 8c, 8d, 8e) sont disposées à distance les unes des autres le long de l'élément de protection (2) et des sections sans couche de couverture sont prévues entre les sections de couche de couverture (8a, 8b, 8c, 8d, 8e).

10. Élément de protection selon la revendication 8, **caractérisé en ce que** les sections sans couche de couverture sont plus longues ou plus courtes que les sections de couche de couverture (8a, 8b, 8c, 8d, 8e).

11. Élément de protection selon l'une des revendications précédentes, **caractérisé en ce que** l'élément de protection (2) est en forme de tuyau et le film plastique s'étend au moins sur une section longitudinale de la face intérieure de la base (6), de préférence sur tout la face intérieure de la base (6).

12. Élément de protection selon l'une des revendications précédentes, **caractérisé en ce que** l'élément de protection (2) est formée de telle manière que le moyen d'arrimage ou d'élingage (4) peut être déplacé essentiellement librement dans l'élément de protection (2).

13. Élément de protection selon l'une des revendications précédentes, **caractérisé en ce que** la couche de couverture (8) est cousue à la base (6).

14. Système de fixation (1)
- avec un élément de protection (2) selon l'une des revendications précédentes et
- avec un moyen d'arrimage ou d'élingage (4) pour le levage, le serrage ou l'arrimage d'objets (14).

15. Système de fixation selon la revendication 14, **caractérisé en ce que** le moyen d'arrimage ou d'élingage (4) peut être ou est disposé dans l'élément de protection (2) entre la base (6) et la couche de couverture (8) avec l'évidement d'une ou plusieurs sections de couche de couverture (8a, 8b, 8c, 8d, 8e) terminales.

16. Système de fixation selon la revendication 14 ou 15, **caractérisé en ce que** le système de fixation (1) comprend en outre des moyens de fixation (18) reliés ou pouvant être reliés aux moyens d'arrimage ou d'élingage (4), en particulier des crochets.

17. Système de fixation selon les revendications 14 à 16, **caractérisé en ce que** le système de fixation (1) comprend en outre des moyens (20) pour le levage, la serrage ou l'arrimage de l'objet (14) respectif au moyen des moyens d'arrimage ou d'élingage.

18. Utilisation d'un élément de protection (2) selon l'une des revendications 1 à 13 ou d'un système de fixation (1) selon l'une des revendications 14 à 17 pour fixer un objet (14) à transporter sur un transporteur, en particulier un véhicule sur un transporteur de véhicules.
